# EUROPEAN PATENT APPLICATION

(11) **EP 2 575 004 A1**
(43) Date of publication of application: **03.04.2013**
(21) Application number: 12161613.0
(22) Date of filing: 27.03.2012
(51) Int. Cl.: G06F 1/32, H04N 21/443

(54) **Electronic device and control method thereof**

(30) Priority: 30.09.2011 JP 2011218026
(71) Applicant: Kabushiki Kaisha Toshiba, Minato-ku Tokyo 105-8001 (JP)
(72) Inventor: Oura, Kazumasa, Tokyo, 105-8001 (JP)
(74) Representative: Henkel, Breuer & Partner

(57) **Abstract**

According to one embodiment, an electronic device characterized by including, a first power supply module (182) configured to supply power necessary at least for a video display and sound reproduction when connected to the commercial power source, if that can maintain one of connected and non-connected states with a commercial power source, a second power supply module (186) configured to supply supplies power to connect the first power supply module to the commercial power source, if the first power supply module is in the non-connected state to the commercial power source and receives a signal instructing establishment of a connection of the commercial power source to the first power supply module, and a power controller (192) configured to connect the commercial power source to the first power supply module during operation by the second power supply module, if to receive the signal instructing the establishment of the connection of the commercial power source to the first power supply module.

## Description

Embodiments described herein relate generally to an electronic device and a control method thereof.

Electronic devices operating by receiving the supply of commercial power are required to minimize power consumption in a standby state in which minimum input instructions are accepted, in addition to the magnitude of power consumption during normal operation.

Regarding the magnitude of power consumption, particularly in the standby state, power supplied from the commercial power source is required to be practically zero.

Therefore, since a wide variety of programs provided by the broadcasting stations or the delivery enterprises are present and the number of the enterprises is high, a program desired by the user may be passed over when he/she selects a recorded program A general architecture that implements the various features of the embodiments will now be described with reference to the drawings. The drawings and the associated descriptions are provided to illustrate the embodiments and not to limit the scope of the invention.
FIG. 1 is an exemplary diagram showing an example of an electronic device to which an embodiment is applied, according to an embodiment;
FIG. 2 is an exemplary diagram showing an example of a side surface of the electronic device to which an embodiment is applied, according to an embodiment;
FIG. 3 is an exemplary diagram showing an example of a configuration of the electronic device to which an embodiment is applied, according to an embodiment;
FIG. 4 is an exemplary diagram showing an example of a power supply module of the electronic device to which an embodiment is applied, according to an embodiment; and
FIG. 5 is an exemplary diagram showing an example of a power saving module of the electronic device to which an embodiment is applied, according to an embodiment.

Various embodiments will be described hereinafter with reference to the accompanying drawings.

In general, according to one embodiment, an electronic device characterized by comprising: a first power supply module configured to supply power necessary at least for a video display and sound reproduction when connected to the commercial power source, if that can maintain one of connected and non-connected states with a commercial power source; a second power supply module configured to supply supplies power to connect the first power supply module to the commercial power source, if the first power supply module is in the non-connected state to the commercial power source and receives a signal instructing establishment of a connection of the commercial power source to the first power supply module; and a power controller configured to connect the commercial power source to the first power supply module during operation by the second power supply module, if to receive the signal instructing the establishment of the connection of the commercial power source to the first power supply module.

Embodiments will now be described hereinafter in detail with reference to the accompanying drawings. Elements and configurations described below may be realized by hardware or by software using a microcomputer (central processing unit [CPU]), that is, a processing unit.

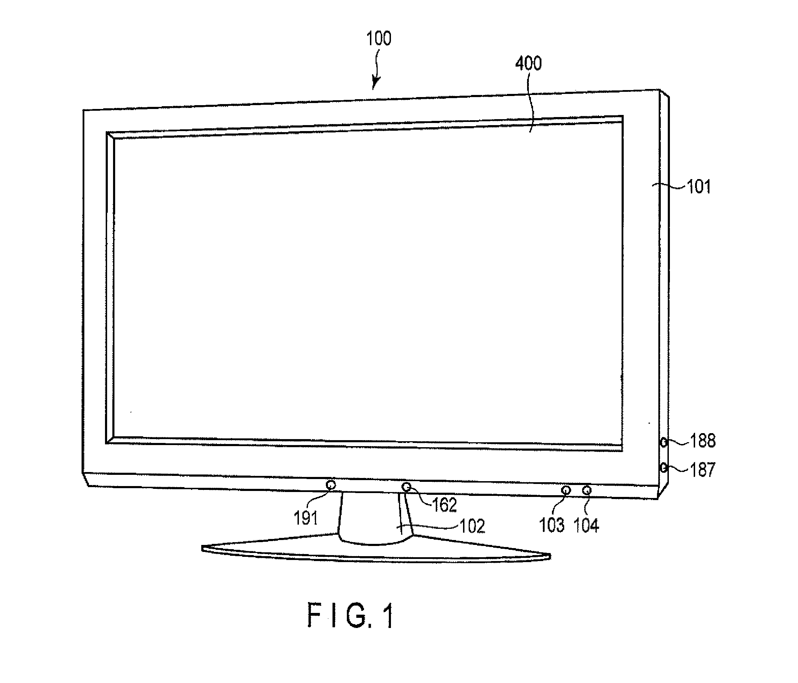

FIG. 1 shows an example of an appearance of an electronic device, for example, a broadcast receiving apparatus that receives and reproduces a broadcast (also called a program or content) supplied by a space wave or by wire through a network, for example, a television receiving apparatus (also called a television apparatus) 100.

The broadcast receiving apparatus (television apparatus) 100 includes a main body 101 in which a display 400 that displays video is provided and a leg 102 that supports the main body 101 in a self-supporting state.

In the main body 101, a lighting and indicating module 103, a lighting and indicating module 104, a main power button 187, an eco-setting switch 188, a first receiving module 162, and a second receiving module 191 are provided. The lighting and indicating module 103 and the lighting and indicating module 104 inform a user of states of the broadcast receiving apparatus 100 or the like by lighted states. The main power button 187 is a switch to change the power state of the broadcast receiving apparatus 100. The eco-setting switch 188 is a switch to change an operation when the power state of the broadcast receiving apparatus 100 is changed. The first receiving module 162 and the second receiving module 191 receive a signal transmitted from a remote controller.

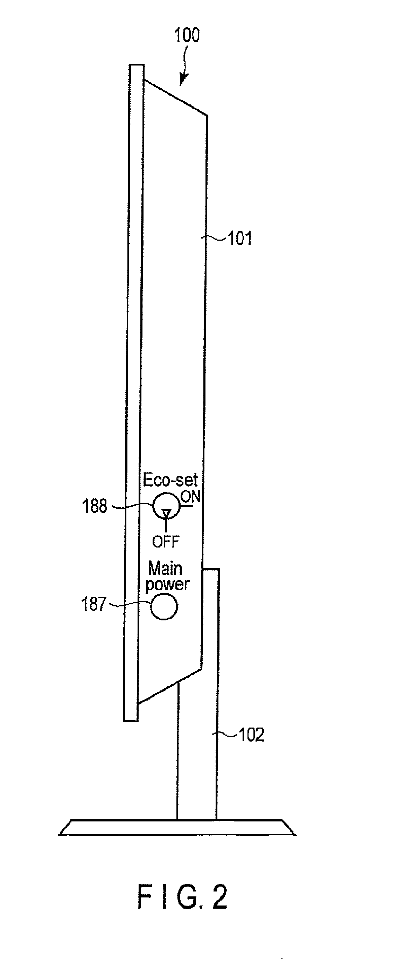

FIG. 2 shows an example of a side surface portion of the broadcast receiving apparatus 100.

The main power button 187 and the eco-setting switch 188 are provided in the side surface portion of the main body 101 of the broadcast receiving apparatus 100. The main power button 187 and the eco-setting switch 188 may also be provided in an upper portion or a back portion of the main body 101 of the broadcast receiving apparatus 100. Further, the main power button 187 and the eco-setting switch 188 may be provided in a side portion of the display 400 of the main body 101.

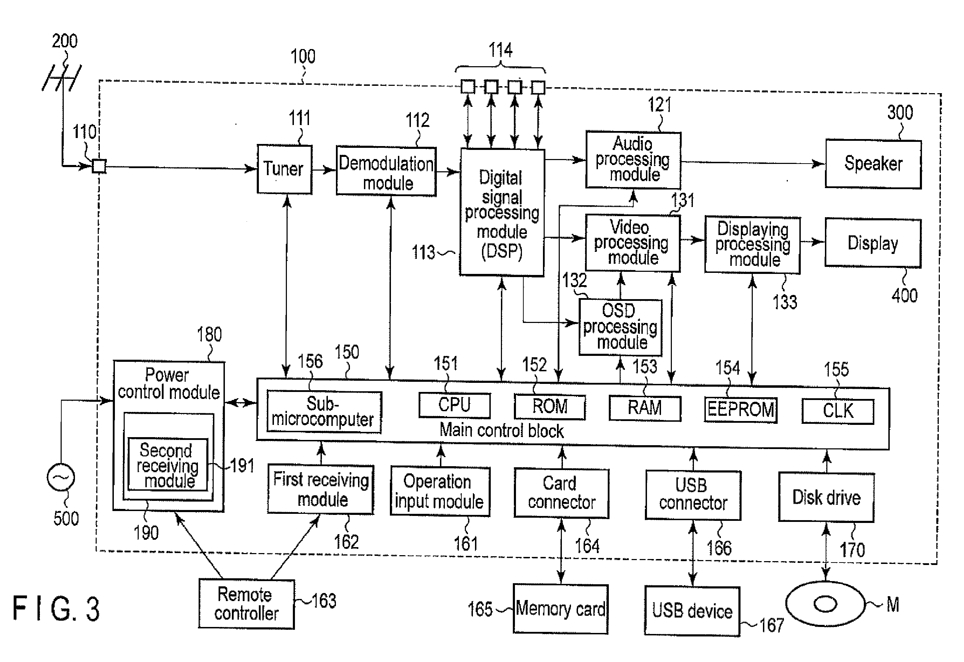

FIG. 3 shows an example of a main configuration of the broadcast receiving apparatus 100.

The broadcast receiving apparatus 100 includes a broadcast input terminal 110, a tuner 111, a demodulation module 112, a Digital Signal Processing module (DSP) 113, a communication interface 114, an audio processing module 121, a video processing module 131, an OSD processing module 132, a display processing module 133, a Main Control Block (Main Processing Unit, MPU) 150, an operation input module 161, the first receiving module 162, a card connector 164, a USB connector 166, a disk drive 170, and a power control module 180. The broadcast receiving apparatus 100 further includes a speaker 300 and the display 400.

The broadcast input terminal 110 is an input terminal into which, for example, a digital broadcasting signal received by an antenna 200 is input. The antenna 200 receives, for example, a terrestrial digital broadcasting signal, a BS (Broadcasting Satellite) digital broadcasting signal and/or a 110 degree CS (Communication Satellite) digital broadcasting signal. That is, content such as a program supplied by a broadcasting signal is input into the broadcast input terminal 110.

The broadcast input terminal 110 supplies the received digital broadcasting signal to the tuner 111. The tuner 111 is a digital broadcasting signal tuner. The tuner 111 does tuning (channel selection) of a digital broadcasting signal supplied from the antenna 200. The tuner 111 transmits a tuned digital broadcasting signal to the demodulation module 112.

The demodulation module 112 demodulates the received digital broadcasting signal. The demodulation module 112 inputs the demodulated digital broadcasting signal into the DSP (Digital Signal Processing module) 113. That is, the antenna 200, the tuner 111, and the demodulation module 112 function as receiving units (or modules, or devices) that receive content.

The DSP 113 functions as a digital signal processing module that performs signal processing on a digital broadcasting signal (content data of dynamic images). The DSP 113 performs signal processing on the digital broadcasting signal supplied from the demodulation module 112. That is, the DSP 113 separates the digital broadcasting signal into a video signal, an audio signal, and other data signals. The DSP 113 supplies an audio signal to the audio processing module 121. The DSP 113 also supplies a video signal to the video processing module 131. Further, the DSP 113 supplies a data signal to the MPU (Main Control Block) 150 and/or the OSD processing module 132.

The DSP 113 performs signal processing on a digital signal received from the communication interface 114. For example, the DSP 113 separates the digital signal into a digital video signal and a digital audio signal. The DSP 113 supplies a digital audio signal to the audio processing module 121. The DSP 113 also supplies a digital video signal to the video processing module 131. Further, the DSP 113 supplies a data signal to the MPU 150 and/or the OSD processing module 132.

The DSP 113 selects content input into the communication interface 114 or content input into the broadcast input terminal 110 to perform processing on the selected content. That is, the DSP 113 performs separation processing on one of a digital broadcasting signal and a digital signal.

The audio processing module 121 converts a digital audio signal received from the DSP 113 into a signal in a format that can be reproduced by the speaker 300. The audio processing module 121 supplies an audio signal to the speaker 300. The speaker 300 reproduces the sounds (audio, voice and/or phone) represented by the supplied audio signal.

The video processing module 131 converts a video signal received from the Digital Signal Processing module (DSP) 113 into a video signal in a format that can be reproduced by the display 400. That is, the video processing module 131 decodes (reads) the video signal received from the DSP 113 into a video signal in a format that can be reproduced by the display 400. The video processing module 131 also superimposes an OSD signal supplied from the OSD processing module 132 on a video signal. The video processing module 131 outputs a video signal to the display processing module 133.

The OSD processing module 132 generates an OSD signal that displays a graphical user interface (GUI), subtitles, the time, and other information by superimposing them on the screen based on a data signal supplied from the DSP 113 and/or a control signal supplied from the MPU 150.

The display processing module 133 performs image quality adjustment processing of the tint, brightness, sharpness, contrast, and the like on the received video signal based on control from the MPU 150. The display processing module 133 supplies a video signal whose image quality has been adjusted to the display 400. The display 400 displays video (moving picture, and/or still image) based on the supplied video signal.

The display 400 includes, for example, a liquid crystal display panel including a plurality of pixels arrayed in a matrix shape and a backlight illuminating the liquid crystal panel. The display 400 displays video based on a video signal supplied from the broadcast receiving apparatus 100.

Incidentally, the broadcast receiving apparatus 100 may include, instead of and/or further include the display 400, a video output terminal. Also, the broadcast receiving apparatus 100 may include, instead of and/or further include the speaker 300, an audio output terminal.

The MPU 150 functions as a main control unit (MPU) that controls the operation of each unit (or module or device) of the broadcast receiving apparatus 100. The MPU 150 includes a CPU (Central Processing Unit) 151, a read-only memory (ROM) 152, a random access (rewritable) memory (RAM) 153, an EEPROM (nonvolatile memory) 154, a clock (CLK) 155, and a sub-microcomputer 156. The MPU 150 performs various kinds of processing based on an operation signal supplied from the operation input module 161.

The CPU 151 is an arithmetic element, holds firmware, and includes a memory region for execution. The CPU 151 realizes various functions by executing programs stored in the ROM 152 or the EEPROM 154. The CPU 151 and the sub-microcomputer 156 operate according to the clock generated by the clock (CLK) 155.

The ROM 152 stores a program to control the broadcast receiving apparatus 100 and also programs to realize various functions. The CPU 151 activates a program stored in the ROM 152 based on an operation signal supplied from the operation input module 161. Accordingly, the module 150 controls the operation of each module (or unit).

The RAM 153 functions as a work memory of the CPU 151. That is, the RAM 153 stores operation results of the CPU 151, data read by the CPU 151, input information input by the operation input module 161 or a remote controller 163.

The EEPROM 154 stores various kinds of setting information and programs.

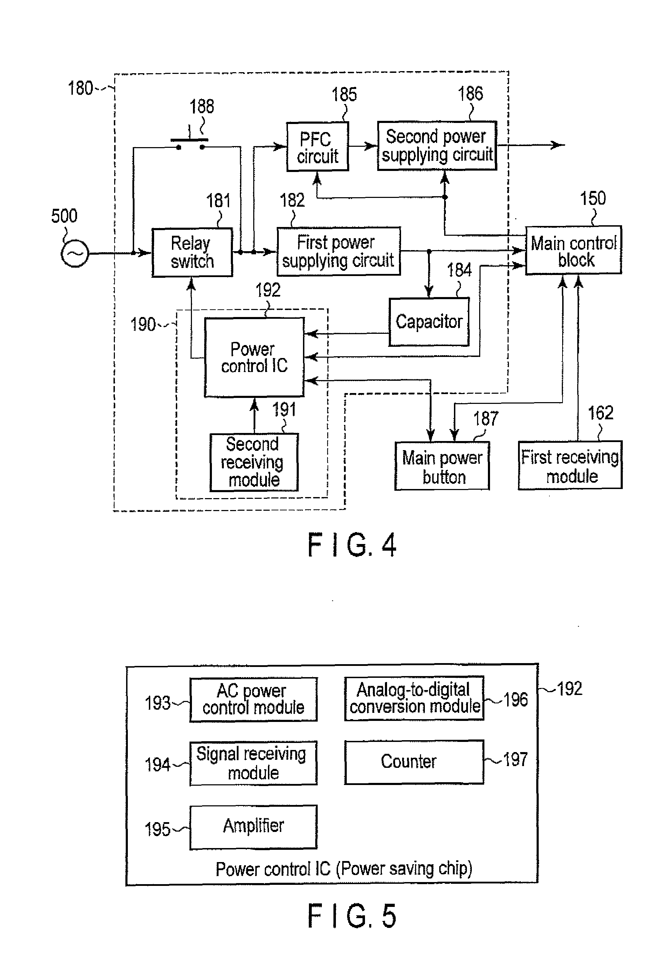

The sub-microcomputer 156 works together with an AC power control module 190 of the power control module 180 described later by using FIGS. 4 and 5 to stop the operation of image output processing that outputs an image signal and signal processing and is useful to reduce power acquired from the commercial power source to practically zero in a standby state in which minimum input instructions are accepted. The sub-microcomputer 156 works together (cooperates) with a first power circuit 182 to control the operation of the broadcast receiving apparatus 100 mainly accepted by the second receiving module 191 in a second standby state described later.

The operation input module 161 is, for example, an operation key, keyboard, mouse, touch pad, or another input unit (or module) capable of generating an operation signal in accordance with operation input. For example, the operation input module 161 generates an operation signal in accordance with operation input. The operation input module 161 supplies the generated operation signal to the MPU 150.

Incidentally, the touch pad includes devices that generate position information based on an electrostatic sensor, thermal sensor, or other systems. If the broadcast receiving apparatus 100 includes the display 400, the operation input module 161 may be configured to include a touch panel integrally formed with the display 400.

The first receiving module 162 includes, for example, a sensor that receives an operation signal from the remote controller 163. The first receiving module 162 supplies the received signal to the MPU 150. The MPU 150 receives a signal supplied from the first receiving module 162 and decodes an original operation signal transmitted from the remote controller 163 by amplifying and digitizing the received signal.

The remote controller 163 generates an operation signal based on user's operation input. The remote controller 163 transmits the generated operation signal to the first receiving module 162 through infrared-ray communication. Incidentally, the first receiving module 162 and the remote controller 163 may be configured to transmit and receive an operation signal through other radio communication such as a radio wave.

The card connector 164 is, for example, an interface to communicate with a memory card 165 storing dynamic image content. The card connector 164 reads dynamic image content data from the connected memory card 165 to supply the content data to the MPU 150.

A Universal Serial Bus (USB) connector 166 is an interface to communicate with a USB device 167. The USB connector 166 supplies a signal supplied from the connected USB device 167 to the MPU 150.

If, for example, the USB device 167 is an operation input device such as a keyboard, the USB connector 166 receives an operation signal from the USB device 167. The USB connector 166 supplies the received operation signal to the MPU 150. In this case, the MPU 150 performs various kinds of processing based on the operation signal supplied from the USB connector 166.

If, for example, the USB device 167 is a storage apparatus storing dynamic image content data, the USB connector 166 can acquire content from the USB device 167. The USB connector 166 supplies the acquired content to the MPU 150.

The disk drive 170 has a drive into which, for example, a compact disc (CD), Digital Versatile Disc (DVD), Blu-ray Disc ([BD] registered trademark), or another optical disk M capable of recording dynamic image content data can be inserted. The disk drive 170 reads content from the inserted optical disk M and supplies the read content to the MPU 150.

The power control module 180 controls the supply of power to each unit (or module) of the broadcast receiving apparatus 100. The power control module 180 receives power from, for example, a commercial power source 500. The commercial power source 500 supplies the AC power to the power control module 180. The power control module 180 converts the received AC power into DC power and supplies the DC power to each unit (or module). Incidentally, the power control module 180 may directly receive DC power converted via, for example, an AC adapter.

The power control module 180 includes the second receiving module 191 and a capacitor as a power storage module. The second receiving module 191 includes a sensor or the like that receives an operation signal from the remote controller 163. The power control module 180 controls the power state of the broadcast receiving apparatus 100 based on an operation signal received by first receiving module 162 or the second receiving module 191.

The power control module 180 charges power supplied via an AC adapter or the like in the capacitor. The power control module 180 operates the second receiving module 191 by using power charged in the capacitor.

The broadcast receiving apparatus 100 may further include other interfaces. Such interfaces include, for example, Serial Advanced Technology Attachment (Serial-ATA), a local area network (LAN) port and the like. The broadcast receiving apparatus 100 can acquire and reproduce content recorded in a device connected through an interface. The broadcast receiving apparatus 100 can also output the reproduced audio signal and video signal to a device connected through an interface.

If the broadcast receiving apparatus 100 is connected to a network through an interface, the broadcast receiving apparatus 100 can acquire and reproduce dynamic image content data in the network.

Further, the broadcast receiving apparatus 100 may include a storage device such as a hard disk drive (HDD, large-capacity storage device) and a solid-state Drive (SSD, that is, a reader/writer capable of recording in and reading from a semiconductor memory device). If the storage device stores dynamic image content data, the broadcast receiving apparatus 100 can read and reproduce content stored in the storage device. The broadcast receiving apparatus 100 can also store, for example, content supplied by a broadcasting signal or via a network in the storage device.

FIG. 4 shows an example of the configuration of the power control module 180.

The power control module 180 supplies power supplied from the commercial power source 500 to each unit (or module) of the broadcast receiving apparatus 100 The power control module 180 includes a relay switch 181, the first power circuit 182, a capacitor (charging battery) 184, a power factor correction (PFC) circuit 185, a second power circuit 186, the eco-setting switch 188, and the AC power control module 190. The AC power control module 190 includes the second receiving module 191 and a power control IC (power saving chip) 192. The main power button 187 shown in FIG. 1 is connected to the MPU 150 and the power control IC 192. Also, the first receiving module 162 shown in FIGS. 1 and 3 is connected to the MPU 150.

The relay switch 181 is a switch performing a mechanical operation by receiving an electric signal. The relay switch 181 is connected between the commercial power source 500 and the first power circuit 182. The PFC circuit 185 is further connected subsequent to the relay switch 181. That is, the relay switch 181 switches the state in which an AC from the commercial power source 500 is supplied to the first power circuit 182 and the PFC circuit 185 (AC-ON state) and the state in which an AC from the commercial power source 500 is not supplied to the first power circuit 182 and the PFC circuit 185 (AC-off state) by on/off control.

The first power circuit 182 includes an AC/DC converter that converts an AC into a DC. The first power circuit 182 converts an AC supplied from the commercial power source 500 into a DC and supplies the DC to the capacitor 184 and the MPU 150. For example, the first power circuit 182 converts an AC supplied from the commercial power source 500 into a DC of ±5 V and supplies the DC to the capacitor 184 and the MPU 150. The MPU 150 can operate with a DC supplied by the first power circuit 182.

The capacitor 184 functions as a power storage module (or unit) that stores and discharges charges by the electrostatic capacity. The capacitor 184 stores a DC supplied from the first power circuit 182. The capacitor 184 supplies a DC of a predetermined voltage from stored power (capacity) to the power control IC 192. The power control IC 192 can operate with a DC supplied from the capacitor 184.

The power control module 180 may also be configured to include, instead of the capacitor 184, a secondary battery, condenser, or other modules capable of storing and discharging charges.

The PFC circuit 185 is a power-factor improvement circuit to use an input current of a predetermined voltage more efficiently. The PFC circuit 185 is connected to an output terminal of the relay switch 181. That is, the PFC circuit 185 makes phase corrections of an AC supplied from the commercial power source 500 and supplies the corrected AC to the second power circuit 186. On/off control of the PFC circuit 185 is controlled by the MPU 150.

The second power circuit 186 includes an AC/DC converter that converts an AC into a DC. The second power circuit 186 converts an AC supplied from the commercial power source 500 into a DC and supplies the DC to signal processing systems and output systems in the broadcast receiving apparatus 100. On/off control of the second power circuit 186 is controlled by the MPU 150.

For example, the second power circuit 186 converts the AC supplied from the commercial power source 500 into a DC of ±12 V (volt) and supplies the DC to the signal processing systems such as the tuner 111, the demodulation module 112, the DSP 113, the audio processing module 121, the video processing module 131, the OSD processing module 132, and the display processing module 133 and output systems such as the speaker 300 and the display 400. That is, each module (or unit) of the above signal processing systems and output systems can operate with a DC supplied by the second power circuit 186.

Incidentally, the second power circuit 186 may also be configured to supply a DC to the USE connector 166, the disk drive 170, and other modules in the broadcast receiving apparatus. 100.

The main power button 187 is a switch to change the power state of the broadcast receiving apparatus 100. As shown in FIG. 1, the main power button 187 is installed in an operable state from outside. If the main power button 187 is pressed, the main power button 187 transmits a signal to the MPU 150 or the power control IC 192.

The MPU 150 effects on/off control of the PFC circuit 185 and the second power circuit 186 based on a signal from the first receiving module 162 or the main power button 187. For example, if a power operation signal is input from the first receiving module 162 or the main power button 187 while the first power circuit 182 and the second power circuit 186 are operating, the MPU 150 turns off the PFC circuit 185 and the second power circuit 186. When the PFC circuit 185 and the second power circuit 186 are turned off, the broadcast receiving apparatus 100 enters a standby state in which image output processing that outputs an image signal and signal processing are not performed and minimum input instructions are accepted.

The eco-setting switch 188 is a switch to change an operation when the power state of the broadcast receiving apparatus 100 is changed. The eco-setting switch 188 is connected in parallel to the relay switch 181. As shown in FIG. 1, the eco-setting switch 188 is installed in an operable state from outside. The eco-setting switch 188 is switched on/off in accordance with an operation from outside. The eco-setting switch 188 may also be configured to be switched on/off in accordance with a control signal from the MPU 150.

If the eco-setting switch 188 is turned on (short circuit or activated), the AC from the commercial power source 500 is supplied to the first power circuit 182 and the PFC circuit 185 regardless of the on/off state of the relay switch 181. If the eco-setting switch 188 is turned off (open), the supply of an AC from the commercial power source 500 to the first power circuit 182 and the PFC circuit 185 is switched in accordance with the on/off state of the relay switch 181.

The AC power control module 190 effects on/off control of the relay switch 181 by receiving the supply of a DC from the capacitor 184. Accordingly, the AC power control module 190 switches the supply/non-supply of an AC from the commercial power source 500. A state in which there is no connection to the commercial power source 500 (power supply from the commercial power source 500), that is, practically zero power is acquired from the commercial power source 500 is called an AC-off (no power consumption during standby) state.

The second receiving module 191 includes a sensor or the like that receives an operation signal from the remote controller 163. The second receiving module 191 supplies the received signal to the power control IC 192.

The power control IC 192 receives a signal supplied from the second receiving module 191 and decodes an original operation signal transmitted from the remote controller 163 by amplifying and digitizing the received signal. The power control IC 192 controls on/off operation of the relay switch 181 based on an operation signal. The power control IC 192 is connected to the MPU 150 and a control signal can mutually be transmitted and received therebetween. Further, the power control IC 192 is connected to the main power button 187 and can receive a signal from the main power button 187.

The MPU 150 (sub-microcomputer 156) and the power control IC 192 control the broadcast receiving apparatus 100 in one of the normal state, the first standby state, and the second standby state by controlling the operations of the relay switch 181, the eco-setting switch 188, the first power circuit 182, and the second power circuit 186.

The normal state is a state in which the first power circuit 182 and the second power circuit 186 operate and power can be supplied to the MPU 150, signal processing systems, and output systems. That is, if the broadcast receiving apparatus 100 is in the normal state, broadcast receiving apparatus 100 can cause the display 400 to display video and the speaker 300 to reproduce a sound.

The first standby state is a state in which the first power circuit 182 operates and the second power circuit 186 is stopped. That is, the first standby state is a state in which power is supplied to the MPU 150 and power is not supplied to the signal processing systems and output systems. In this case, the broadcast receiving apparatus 100 does not display video and does not reproduce sounds (audio).

Because power is supplied to the MPU 150, the MPU 150 can receive a signal from the first receiving module 162. The MPU 150 also supplies power to the main power button 187. Thus, the MPU 150 can turn on the PFC circuit 185 and the second power circuit 186 based on a signal from the first receiving module 162 or the main power button 187. Accordingly, the MPU 150 controls the state of the broadcast receiving apparatus 100 return from the first standby state to the normal state.

In the first standby state, the MPU 150 is likely to be affected by noise of the power unit (or module) and the screen. Thus, it is preferable to use an IC (microcomputer) with high power consumption and resistant to noise as the MPU 150.

The second standby state is a state in which the first power circuit 182 and the second power circuit 186 are stopped. That is, the second standby state is a state in which power is supplied to none of the MPU 150, the signal processing systems, and output systems. In this case, the broadcast receiving apparatus 100 does not display video, does not reproduce a sound, and does not hold the RAM 153. Because power is not supplied to the MPU 150 excluding the sub-microcomputer 156, the MPU 150 cannot receive a signal from the first receiving module 162.

Incidentally, power is supplied to the power control IC 192 from the capacitor 184. Thus, the power control IC 192 can receive a signal from the second receiving module 191. The power control IC 192 supplies a portion of power supplied from the capacitor 184 to the main power button 187. The power control IC 192 can turn on the relay switch 181 based on a signal from the second receiving module 191 or the main power button 187. Accordingly, the state of the broadcast receiving apparatus 100 return from the second standby state to the normal state by receiving operation input by the sub-microcomputer 156 from the second receiving module 191 or activation of the MPU 150 following on of the relay switch 181 by the main power button 187.

If the eco-setting switch 188 is on or the relay switch 181 is on, the MPU 150 can switch the state of the broadcast receiving apparatus 100 between the normal state and the first standby state by controlling the operation of the second power circuit 186. Further, if the power control IC 192 turns off the relay switch 181, the broadcast receiving apparatus 100 enters the second standby state.

To allow the user to visually recognize easily which of the first standby state and the second standby state the broadcast receiving apparatus 100 is in (to inform the user of the standby state), a combination of the lighting and indicating module 103 and the lighting and indicating module 104 described above is used. For example, the lighting and indicating module 103 indicates the state of power supply in the broadcast receiving apparatus 100. The lighting and indicating module 104 indicates the state of timed recording or viewing reservations. If the broadcast receiving apparatus 100 is in the normal state, the lighting and indicating module 103 lights in a first color. If the broadcast receiving apparatus 100 is in the first standby state, the lighting and indicating module 103 lights in a second color. Further, if the broadcast receiving apparatus 100 is in the second standby state, the lighting and indicating module 103 goes out.

If a signal (power supply operation signal) to switch on/off the power supply of the broadcast receiving apparatus 100 is input from the remote controller 163 or the main power button 187, the MPU 150 .stops the operation of the second power circuit 186 and causes the broadcast receiving apparatus 100 to enter the first standby state. Further, the MPU 150 counts an elapsed time after stopping the operation of the second power circuit 186. If the counted time reaches a preset first standby time, the MPU 150 transmits a command to turn off the relay switch 181 to the power control IC 192. The MPU 150 attaches information indicating a preset second standby time to the command.

FIG. 5 shows a configuration example of the power control IC (power saving chip) 192.

The power control IC 192 includes an AC power control module 193, a signal receiving module 194, an amplifier 195, an analog-to-digital conversion module 196, and a counter 197. Incidentally, each module (or device) of the power control IC 192 can operate with a DC supplied from the capacitor 184.

The AC power control module 193 controls on/off operation of the relay switch 181. If, as described above, the AC power control module 193 turns off the relay switch 181, at time when a command to turn off the relay switch 181 is received from the MPU 150. If the relay switch 181 is off and the eco-setting switch 188 is turned off, the commercial power source 500 and the broadcast receiving apparatus 100 are in a non-connected state and thus, power consumption during standby can further reduced (power acquired from the commercial power source can be reduced to practically zero).

The signal receiving module 194 receives a signal transmitted from the second receiving module 191. The amplifier 195 amplifies a signal received by the signal receiving module 194. The analog-to-digital conversion module 196 converts a signal amplified by the amplifier 195 into a digital signal. Accordingly, the power control IC 192 can decode an original operation signal transmitted from the remote controller 163. The counter 197 counts the clock from the clock (CLK) 155 supplied via the sub-microcomputer 156 to count an elapsed time. That is, the counter 197 provides the function as a timer in cooperation with the sub-microcomputer 156.

If the AC power control module 193 receives a command from the MPU 150 and turns off the relay switch 181, the AC power control module 193 starts to count the time by the counter 197. If the time counted by the counter 197 reaches the second standby time indicated by the command, the AC power control module 193 turns on the relay switch 181.

As described above, the signal receiving module 194, the amplifier 195, and the analog-to-digital conversion module 196 operate by receiving the supply of power from the capacitor 184. Thus, even if the eco-setting switch 188 and the relay switch 181 are turned off, the power control IC 192 can decode an original signal by receiving a signal transmitted from the remote controller 163 by the second receiving module 191.

If a power operation signal to switch on/off the power supply of the broadcast receiving apparatus 100 is received from the remote controller 163 or the main power button 187 while the relay switch 181 is off, the AC power control module 193 turns on the relay switch 181.

Accordingly, the broadcast receiving apparatus 100 enters a state in which an AC from the commercial power source 500 is supplied to the first power circuit 182. As a result, the MPU 150 is activated so that video can be displayed and a sound can be reproduced.

Incidentally, the MPU 150 may be configured to transmit a command to turn off the relay switch 181 to the power control IC 192 when recognized that a preset first time arrives. In this case, the MPU 150 attaches information indicating a preset second time and information (time information) indicating the current time to the command. At this point, the information (time information) indicating the current time is stored in the EEPROM 154.

Also in this case, if the AC power control module 193 receives a command from the MPU 150 and turns off the relay switch 181, the AC power control module 193 starts to count the time by the counter 197. Accordingly, the AC power control module 193 recognize the current time. If the current time reaches the second time indicated by the command, the AC power control module 193 turns on the relay switch 181.

Incidentally, the first power circuit 182, the second power circuit 186, signal processing, and image displays are stopped in the second standby state. Thus, an IC with lower power consumption than the IC of the MPU 150 can be used as the power control IC (power saving chip) 192.

In the second standby state, the sub-microcomputer 156 manages the operation such as recording reservations held by, for example, the EEPROM 154. Incidentally, as described above, the first power circuit 182 and the second power circuit 186 are also off in the second standby state and thus, the clocking function is also practically stopped. Thus, the activation of the broadcast receiving apparatus 100 following recording reservations can be realized by securing the above function as a timer by using the clock counted by the counter 197.

Incidentally, the sub-microcomputer 156 can realize the operation of the broadcast receiving apparatus 100 mainly received by the second receiving module 191 (activation of the broadcast receiving apparatus 100 following recording reservations) based on time information held by the EEPROM 154 and the clock counted by the counter 197 as the current time when switched to the above second standby state. In this case, generally 1 sec is added to the clocking result of a clocking module (not shown) in consideration of a processing time (delay) to calculate an intrinsic time by adding the count value (clock number) held by the counter 197 to the time information held by the EEPROM 154.

The sub-microcomputer 156 controls the power control IC (eco-chip) 192 and the first power circuit 182 to charge the capacitor 184 each time the return from the above second standby state to the above normal state occurs (connection to the commercial power source). Accordingly, the shortage of storage capacitance (of the capacitor 184) corresponding to the power consumed from the capacitor 184 in the above second standby state is made up. If the capacitor 184 is not charged for a certain fixed period due to factors such as no activation (no recording reservation setting for a certain fixed period) (of the broadcast receiving apparatus 100) accompanying execution of recording reservations, the sub-microcomputer 156 charges the capacitor 184 by temporarily securing energization from the commercial power source 500 (by making the transition to the first standby state in which the first power circuit 182 is turned on) in a time zone when surplus power is available such as a midnight time zone. Accordingly, reservation information for recording reservations can be prevented from being lost (disappearing) or the clocking (timer) function can be prevented from stopping after the count of the clock of the clock (CLK) 155 by the counter 197 being interrupted.

Clocking by the sub-microcomputer 156 and the counter 197 can be used to realize an on-timer function that activates the broadcast receiving apparatus 100 after a fixed period passes.

In the above AC-off state, the lighting and indicating modules 103, 104 provided in the main body 101 of the broadcast receiving apparatus 100 are each assumed to be off (not lighting). However, for example, the lighting and indicating module 104 (see FIG. 1, timed recording based on recording reservations is done) is lit while recording following recording reservations is done. Accordingly, undesired removal of a power cord from an outlet socket by user or interruption of timed recording due to settings of the off state when an outlet socket with an off-switch function is used can be avoided.

Also in the above AC-off state, acquisition of program information (electronic program guide [EPG] information) updated normally in a midnight time zone or at fixed intervals is requested and thus, it is preferable to establish a connection to the commercial power source 500 at fixed intervals together with the timing to charge the capacitor 184 described above. In this case, on (lighting) of the lighting and indicating module 104 can be made non-lighting (off state maintained) according to user settings.

By applying the embodiment, as described above, an electronic device having an AC-off state (AC-off mode during standby) that reduces power acquired from the commercial power source in a standby state to practically zero can be provided.

The AC-off state can further reduce power consumption compared with power consumed in conventional standby mode.

Incidentally, timed recording following recording reservations can be done even in the AC-off state and in that case, undesired removal of a power cord from an outlet socket by user or interruption of timed recording due to settings of the off state when an outlet socket with an off-switch function is used can be avoided by lighting the lighting and indicating module.

## Claims

1. An electronic device **characterized by** comprising:
a first power supply module (182) configured to supply power necessary at least for a video display and sound reproduction when connected to the commercial power source, if that can maintain one of connected and non-connected states with a commercial power source;
a second power supply module (186) configured to supply supplies power to connect the first power supply module to the commercial power source, if the first power supply module is in the non-connected state to the commercial power source and receives a signal instructing establishment of a connection of the commercial power source to the first power supply module; and
a power controller (192) configured to connect the commercial power source to the first power supply module during operation by the second power supply module, if to receive the signal instructing the establishment of the connection of the commercial power source to the first power supply module.

2. The device of claim 1, **characterized by** further comprising:
a third power supply module (184) configured to operate the power control module, if the second power supply module configured to activate.

3. The device of claim 1 or 2, **characterized in that** the power controller configured to connect the second power supply module to the commercial power source in predetermined timing during operation by the second power supply module.

4. The device of claim 1 or 2, **characterized in that** the power controller configured to charge the third power supply module in predetermined timing during operation by the second power supply module.

5. The device of claim 2, **characterized by** further comprising:
a counter (197) configured to count an elapsed time, if the second power supply module configured to operate with the power supplied by the third power supply module.

6. The device of any one of claim 2 to 5, **characterized in that** the third power supply module is rechargeable.

7. The device of any one of claim 1 to 6, **characterized by** further comprising:
a display (400) configured to display video.

8. The device of claim 5, **characterized in that** the counter configured to inform a count value a clocking module operating by the first power supply module, if the first power supply module and the commercial power source are connected.

9. The device of claim 8, **characterized in that** the power controller configured to correct an influence of a delay component, if the counter configured to inform the counted count value to the clocking module.

10. A method recommends for showing program **characterized by** comprising:
receiving a signal instructing establishment of a connection of a commercial power source to a first power supply module by supplying power from a second power supply module that supplies the power to connect the first power supply module to the commercial power source, if the first power supply module necessary for at least a video display and audio reproduction is in a non-connected state to the commercial power source; and
connecting the commercial power source to the first power supply module according to the received signal instructing the establishment of the connection of the commercial power source to the first power supply module during operation by the second power supply module.

11. The method of claim 10, **characterized in that** the second power supply module is charged while the first power supply module is connected to the commercial power source.
